# EUROPEAN PATENT SPECIFICATION

(11) **EP 3 645 864 B1**
(45) Date of publication and mention of the grant of the patent: **04.08.2021**
(21) Application number: 18739596.7
(22) Date of filing: 28.06.2018
(51) Int. Cl.: F03B 13/20, F03B 13/18

(54) **WAVE POWERED GENERATOR**
WELLENKRAFTBETRIEBENER GENERATOR
GÉNÉRATEUR ACTIONNÉ PAR L'ÉNERGIE DES VAGUES

(30) Priority: 30.06.2017 GB 201710550
(43) Date of publication of application: 06.05.2020
(73) Proprietor: Marine Power Systems Limited, Swansea, Wales SA6 8RT (GB)
(72) Inventor: FOSTER, Graham, Swansea South Wales SA1 8AS (GB)
(74) Representative: Murgitroyd & Company
(86) International application number: PCT/GB2018/051805
(87) International publication number: WO 2019/002864

(56) References cited:
- EP-A1- 2 128 430
- WO-A2-2013/068748
- US-A1- 2006 273 594
- US-A1- 2008 217 921
- US-A1- 2010 025 993

## Description

### Field of the Invention

The present invention relates to generators that can be used to extract energy from waves in a body of water, by converting the wave energy to more readily usable energy.

### Background to the Invention

In recent years, there has been increased emphasis on the need to exploit renewable energy so that it significantly contributes to global energy production. A combination of government targets, media representation of the issues associated with non-renewable energy sources, and ever increasing energy costs have all created a powerful driving force for the development of renewable energy systems.

Negative impacts of fossil fuels on our environment are well known, as are the problems and high costs associated with nuclear energy. Harnessing of the huge natural abundance of renewable energy on the other hand is constrained merely by our capability of capturing and supplying it at an economically viable price.

One potential renewable energy source is wave power - an abundant and consistent energy resource available in all of the world's large oceans and seas. Various wave devices for generating energy from wave power have been proposed, but such devices have many limitations with no one device having the proven ability to reliably exploit the available wave power resource over the long term.

We have disclosed in WO2010007418, WO2011158006 and WO2013068748 successively improved generators for converting wave motion to useful energy. The generators disclosed use a submersible reaction body to solve many of the difficulties associated with existing wave energy converters.

However, the wave energy converters disclosed in WO2010007418, WO2011158006 and WO2013068748 still have potential for further improvement.

### Summary of the invention

In accordance with the invention, a generator is provided as outlined in the accompanying claims.

The generator of the present invention is for converting wave motion in a body of water to useful energy, the generator comprising the features of claim 1.

With reference to the prior art, the apparatus described and illustrated in WO2010007418 has an energy capturing float that remains on the sea surface continuously, all the time. This means that in highly energetic sea conditions, such as storms, the float will be subject to high loads. These high loads must be managed by the structure and the power take-off system, resulting in costly over-engineering of the apparatus.

The apparatus described and illustrated in WO2011158006 and WO2013068748 provide improvements over this, however the stability of the submerged reaction member is limited by the mass and therefore size of the reaction member, and therefore is significantly variable across the range of conformations disclosed in WO2011158006 and WO2013068748. Another apparatus is disclosed in US 2010/025993 A1.

We have now devised a generator for converting wave motion in a body of water to useful energy, the generator having positive buoyancy in both the reaction member and the energy capturing float to increase the stability of the reaction member in response to forces exerted on it both directly by the waves and indirectly through forces transferred to it by the power capturing float.

Our simulation work has shown that by increasing the buoyancy of the reaction member it is possible to transfer more of the reaction forces to the seabed and therefore increase the stability of the reaction member, particularly in energetic sea states. A further advantage of increasing the utilisation of the seabed for reaction purposes is that the size and mass of the reaction member can be reduced at the same time as the stability is improved.

The known generator described in the abovementioned WO2013068748 comprises: at least one energy capturing float which is movable in response to said wave motion; a reaction member to be positioned below the energy capturing float; connection means for connecting said at least one energy capturing float to said reaction member and defining a distance between said energy capturing float and said reaction member; energy conversion means for converting relative movement between said reaction member and said at least one respective energy capturing float to the useful energy; wherein the generator includes adaptable depth setting means for setting, over a predetermined range, the depth of the reaction member in the body of water and the height of the reaction member from a bed of the body of water, and in that the connection means are of adjustable length for independently adjusting the distance between the energy capturing float and the reaction member.

Any reference herein to known prior art does not, unless the contrary indication appears, constitute an admission that such prior art is commonly known by those skilled in the art to which the invention relates, at the priority date of this application.

Preferably the connecting means defines a distance between said energy capturing float and said reaction member. Most preferably, the connection means are of adjustable length for independently adjusting the distance between the energy capturing float and the reaction member.

The generator preferably includes adaptable setting means for setting, over a predetermined range, the depth of the reaction member in the body of water. The setting means further is arranged to set the height of the reaction member from the bed of the body of water.

By "setting the depth" we mean controlling in a manner whereby the precise depth can be chosen and fixed in a modifiable manner. In other words, if it is wished to change the set depth, the setting means may be adapted, modified and controlled such that a further precise depth can be chosen and fixed.

In a first embodiment of the invention, the depth setting means comprise at least one flexible mooring line of adjustable length to adjustably secure the reaction member to a bed of the body of water. In this embodiment, the generator has a net positive buoyancy that is resisted by tension of the flexible mooring line(s).

The angle at which the mooring lines are positioned relative to the bed of the body of water can be changed to optimise the stability of the reaction body. A desirable angular configuration of the mooring lines is vertical in the water column, i.e. straight down from the reaction body to the bed of the body of water.

In the above-mentioned embodiment, the depth setting means is preferably coupled to the reaction member by one or more winches.

Preferably, the connectors in the generator according to the invention include at least one flexible line, which is of adjustable length, the length adjustment being typically achieved by winding the or each line around a respective drum. Thus the distance between the reaction member and the energy capturing float can be adjusted by winding the connector lines on or off the respective drums.

In preferred embodiments of the invention the connectors are of adjustable length so as to permit independent adjustment of the distance (or spacing in a vertical direction) between the energy capturing float and the reaction member, and therefore the depth of the energy capturing float in the body of water.

Furthermore, it is preferred that the reaction member has adjustable buoyancy and a plurality of buoyancy modes, including at least one submerged operating mode in which the reaction member and buoyancy float are submerged using the depth setting means, and a maximum buoyancy mode in which the reaction member floats on the surface of the body of water. In any of these plurality of buoyancy modes, the reaction member should have inertia and drag to resist potential movement of the energy capturing float caused by the wave motion.

Reaction member width and/or can be selected to provide maximum stability and may relate proportionally to float diameter, width and/or length. In preferred embodiments, the reaction member length and/or width is selected from the range 30 to 50 metres, where a float diameter, width and/or length is selected from between 10 metres and 20 metres. Most preferably, the reaction member width and/or length is 40 metres and the float diameter, width and/or length is 15 metres. At this approximate ratio, optimum stability is provided for the reaction member within the water. Positive buoyancy of both the reaction member and the float provide adequate tension on the mooring lines of the depth setting means, which in turn also confers an optimum level of stability upon the generator within the water.

The separation between the float and the reaction member is also critical to the stability of the generator, particularly in highly energetic sea conditions wherein the generator is subjected to powerful wave forces. An optimum separation distance between the reaction member and the float is preferably selected from the range 20 to 40 metres. Most preferable embodiments comprise a separation between the float and the reaction member of 30 metres.

Preferred embodiments of the invention will now be described in more detail, with reference to the accompanying drawings, in which like parts are denoted by like reference numerals throughout. In order to avoid detracting from the clarity of the drawings, not all parts are labelled in all drawings.

### Detailed Description

Specific embodiments will now be described by way of example only, and with reference to the accompanying drawings, in which:
FIG. 1 is a perspective view of a preferred embodiment of wave generator according to the invention when on the surface of a body of water (generally, the sea);
FIG. 2 is a perspective view of the wave generator of FIG. 1 when submerged beneath the surface of that body of water; and
FIG. 3 is an orthogonal view showing the energy convertor of FIG. 2 moored to the bed of the body of water.

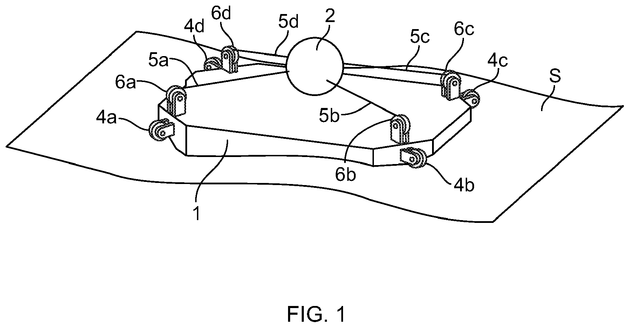

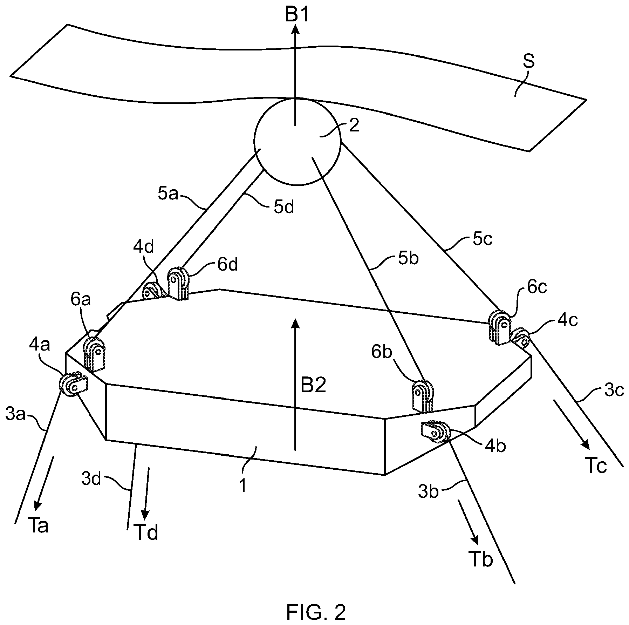

Referring first to FIG. 1 and FIG. 2, there is shown an exemplary wave powered generator according to the invention which comprises a submersible subsea reaction member 1; an energy capturing float 2 that moves in response to the waves; a series of energy converters 6a, 6b, 6c, 6d mounted on the reaction member 1; and respective connecting lines 5a, 5b, 5c, 5d of adjustable length that connect the energy capturing float 2 to the respective energy converter 6a, 6b, 6c, 6d.

In FIG. 1, each of the connecting lines 5a, 5b, 5c, 5d is wound around a drum on the respective energy converter 6a, 6b, 6c, 6d to the fullest or maximum extent such that the spacing between the energy capturing float 2 and the reaction member 1 is at a minimum. In this case the reaction member 1 and the energy capturing float 2 are together floating on the surface S of a body of water.

Conversely, in the arrangement shown in FIG. 2, each of the connecting lines 5a, 5b, 5c, 5d is let out (wound around the respective drum) such that the spacing between the energy capturing float 2 and the reaction member 1 is at a maximum. In this case, the energy capturing float 2 is shown just below the surface S of the body of water.

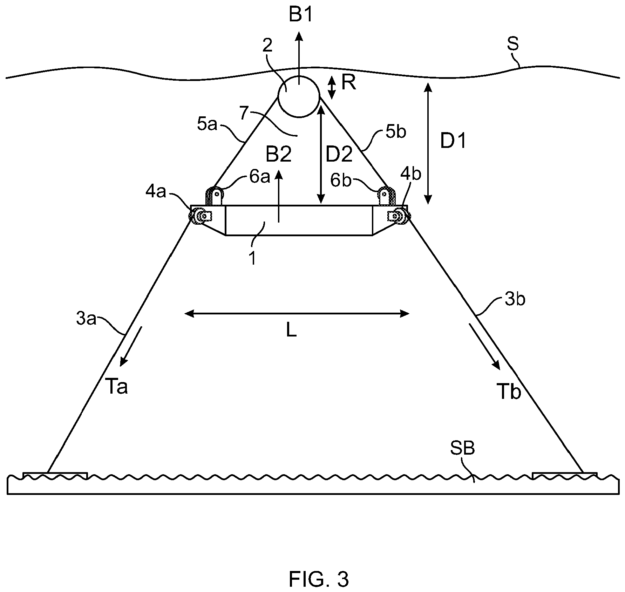

FIG. 2 and FIG. 3 show the wave energy generator with mooring lines 3a, 3b, 3c, 3d which tether the generator to the seabed SB, thereby keeping the generator on station.

The mooring lines 3a, 3b, 3c, 3d may be connected to the reaction body 1 via corresponding length adjusting means 4a, 4b, 4c, 4d to enable the depth of submersion of the reaction member 1 to be varied.

It should be noted that in the first embodiment of the invention the mooring lines 3a, 3b, 3c, 3d remain tensioned at all times so that the generator cannot move freely up and down in the water column. The positive buoyancy of the reaction member 1 and the float 2, B2 and B1 respectively, enables the reaction member 1 to place upon the mooring lines 3a, 3b, 3c, 3d a tension Ta, Tb, Tc, Td, providing stability to the reaction member 1 and the float 2 in highly energetic sea conditions.

In the embodiment shown, the float has a radius R of 7.5 metres (diameter of 15 metres) and the reaction member has a length and width L of 40 metres. The separation from the float 1 and the reaction member 2 is a distance D2 of 30 metres. In this configuration the generator is arranged to perform optimally in an open sea environment.

The reaction member 1 is generally of a hollow construction and is adapted to be selectively filled with air or water to adjust its buoyancy. The wave powered generator according to the invention has a positive net buoyancy comprising the buoyancy of the reaction member 1, B2 and the buoyancy of the energy capturing float 2, B1. The generator has a permanent positive buoyancy, but may comprise a surface configuration as shown in FIG. 1 and a submerged configuration as shown in FIG. 2 and FIG. 3. The submerged configuration is the result of the mooring lines 3a, 3b, 3c, 3d used as a depth setting means.

When in the surface configuration (FIG. 1), the reaction member 1 floats on the surface S of the body of water (such as the sea) with sufficient buoyancy for it to carry all other components of the apparatus. In this condition the generator according to the invention can be readily disconnected from the mooring lines 3a, 3b, 3c, 3d and transported across the surface S of the body of water. The wave powered generator can sit sufficiently high in the water that all connections to mooring lines 3a, 3b, 3c, 3d and power umbilical 7 can be clear of the water and be easily accessible. The wave powered generator can also create its own stable service platform with all serviceable components clear of the water to enable easy access for maintenance.

With reference to FIG. 2, when the wave generator is in the submersed operating configuration, the buoyant reaction member 1 is held suspended by the combination of the energy capturing float 2 and the mooring lines 3a, 3b, 3c, 3d. The net buoyancy of the generator is defined by the sum of the buoyancy values of the reaction member 1 and the energy capturing float 2 (B1 + B2).

The reaction member 1 has a large mass that resists movements caused to it by the forces applied by the float 2 via the connecting lines 5a, 5b, 5c, 5d, and by the forces applied to it directly by the waves. The reaction member 1 also has a large surface area perpendicular to the direction of the heave force, which thereby provides further resistance to movement by way of a large drag and added mass.

The reaction member 1 may be held suspended between the energy capturing float 2 and the seabed SB using the mooring lines 3a, 3b, 3c, 3d at a depth D1 sufficient to ensure that the reaction member 1 is generally below the influence of waves on the sea surface. Therefore movement of the energy capturing float 2 caused by waves results in relative motion between the energy capturing float 2 and the reaction member 1. This movement is taken up by respective working strokes of the energy converters 6a, 6b, 6c, 6d and thus exploited to produce power.

In the illustrated embodiment, a single float 2 is shown, but it will be understood that more than one such float can be provided if appropriate, each with its own series of energy converters mounted on the reaction member 1, together with respective connecting lines.

In the described embodiments, the float radius is shown as 7.5 metres (diameter 15 meters) and the length and width of the reaction member are shown as 40 metres. Alternative embodiments may comprise a float which can be of any shape with a diameter, or width and/or length, of between 10 metres and 20 metres. Alternative embodiments may also comprise a reaction member of any shape, with length and/or width, or diameter (where spherical), of between 20 metres and 40 metres.

## Claims

1. A generator for converting wave motion in a body of water to useful energy, the generator comprising: at least one energy capturing float (2) which is movable in response to said wave motion; a reaction member (1) to be positioned below the energy capturing float (2); connection means (5a, 5b, 5c, 5d) for connecting said at least one energy capturing float (2) to said reaction member (1); energy conversion means (6a, 6b, 6c, 6d) for converting relative movement between said reaction member (1) and said at least one respective energy capturing float (2) to the useful energy; wherein the generator includes adaptable depth setting means (3a, 3b, 3c, 3d) for setting, over a predetermined range, the depth of the reaction member (1) in the body of water and the height of the reaction member (1) from a bed of the body of water, wherein both the float (2) and the reaction member (1) have a positive buoyancy; and **characterised in that** the generator comprises at least one submerged operating mode in which the reaction member (1) and energy capturing float (2) are submerged using the depth setting means (3a, 3b, 3c, 3d).

2. A generator as claimed in claim 1, wherein the connection means (5a, 5b, 5c, 5d) defines a distance between said energy capturing float (2) and said reaction member (1).

3. A generator as claimed in claim 2, wherein the connection means (5a, 5b, 5c, 5d) are of adjustable length for independently adjusting the distance between the energy capturing float (2) and the reaction member (1).

4. A generator as claimed in claim 1, claim 2, or claim 3, wherein the positive buoyancy of the float (2) and the reaction member (1) causes adequate tension in the depth setting means (3a, 3b, 3c, 3d) to provide stability to the reaction member (1) when submerged.

5. A generator as claimed in claims 1 to 4, in which the connection means (5a, 5b, 5c, 5d) comprise at least one flexible line of adjustable length in which the length adjustment is achieved by winding the or each flexible line around a respective drum.

6. A generator as claimed in claims 1 to 5, in which the connection means (5a, 5b, 5c, 5d) are adjustably mounted to the reaction member (1) such that the geometry of the connection means (5a, 5b, 5c, 5d) can be altered.

7. A generator as claimed in any one of claims 1 to 6, wherein the depth setting means (3a, 3b, 3c, 3d) comprise at least one flexible mooring line of adjustable length to adjustably position the reaction member (1) above the bed of the body of water.

8. A generator as claimed in claim 7, wherein the generator has a net positive buoyancy that is resisted by tension of the at least one flexible mooring line (3a, 3b, 3c, 3d).

9. A generator as claimed in any one of claims 1 to 8, wherein the depth setting means (3a, 3b, 3c, 3d) is coupled to the reaction member by a winch (4a, 4b, 4c, 4d).

10. A generator as claimed in any one of claims 1 to 9, wherein at least one of:
a. the reaction member length;
b. the reaction member width;
c. the reaction member diameter;
is selected from the range 20 to 60 metres.

11. A generator as claimed in any one of claims 1 to 10, wherein at least one of:
a. the float diameter;
b. the float length;
c. the float width;
is selected from the range 10 to 20 metres.

12. A generator as claimed in any one of claims 1 to 11, wherein the separation between the float (2) and the reaction member (1) is selected from the range 0 to 50 metres.

## Patentansprüche

1. Ein Generator zum Umwandeln von Wellenbewegung in einem Gewässer in Nutzenergie, wobei der Generator Folgendes beinhaltet: mindestens einen Energieauffangschwimmer (2), der als Antwort auf die Wellenbewegung beweglich ist; ein Reaktionselement (1), das unterhalb des Energieauffangschwimmers (2) positioniert sein soll; Verbindungsmittel (5a, 5b, 5c, 5d) zum Verbinden des mindestens einen Energieauffangschwimmers (2) mit dem Reaktionselement (1); Energieumwandlungsmittel (6a, 6b, 6c, 6d) zum Umwandeln von Relativbewegung zwischen dem Reaktionselement (1) und dem mindestens einen jeweiligen Energieauffangschwimmer (2) in die Nutzenergie; wobei der Generator anpassbare Tiefeneinstellmittel (3a, 3b, 3c, 3d) zum Einstellen der Tiefe des Reaktionselements (1) in dem Gewässer und der Höhe des Reaktionselements (1) von einem Grund des Gewässers über einen vorbestimmten Bereich umfasst, wobei sowohl der Schwimmer (2) als auch das Reaktionselement (1) einen positiven Auftrieb aufweisen; und **dadurch gekennzeichnet, dass** der Generator mindestens einen Untertauchbetriebsmodus beinhaltet, in dem das Reaktionselement (1) und der Energieauffangschwimmer (2) unter Verwendung der Tiefeneinstellmittel (3a, 3b, 3c, 3d) untergetaucht sind.

2. Generator gemäß Anspruch 1, wobei die Verbindungsmittel (5a, 5b, 5c, 5d) einen Abstand zwischen dem Energieauffangschwimmer (2) und dem Reaktionselement (1) definieren.

3. Generator gemäß Anspruch 2, wobei die Verbindungsmittel (5a, 5b, 5c, 5d) eine verstellbare Länge zum unabhängigen Verstellen des Abstands zwischen dem Energieauffangschwimmer (2) und dem Reaktionselement (1) aufweisen.

4. Generator gemäß Anspruch 1, Anspruch 2 oder Anspruch 3, wobei der positive Auftrieb des Schwimmers (2) und des Reaktionselements (1) ausreichende Spannung in dem Tiefeneinstellmittel (3a, 3b, 3c, 3d) verursacht, um dem Reaktionselement (1) beim Untertauchen Stabilität bereitzustellen.

5. Generator gemäß den Ansprüchen 1 bis 4, wobei die Verbindungsmittel (5a, 5b, 5c, 5d) mindestens eine flexible Leine mit verstellbarer Länge beinhalten, bei der die Längenverstellung durch Aufwickeln der oder jeder flexiblen Leine um eine jeweilige Trommel erreicht wird.

6. Generator gemäß den Ansprüchen 1 bis 5, wobei die Verbindungsmittel (5a, 5b, 5c, 5d) verstellbar an dem Reaktionselement (1) angebracht sind, sodass die Geometrie der Verbindungsmittel (5a, 5b, 5c, 5d) geändert werden kann.

7. Generator gemäß einem der Ansprüche 1 bis 6, wobei die Tiefeneinstellmittel (3a, 3b, 3c, 3d) mindestens eine flexible Festmacherleine mit verstellbarer Länge beinhalten, um das Reaktionselement (1) über dem Grund des Gewässers verstellbar zu positionieren.

8. Generator gemäß Anspruch 7, wobei der Generator einen positiven Nettoauftrieb aufweist, dem durch Spannung der mindestens einen flexiblen Festmacherleine (3a, 3b, 3c, 3d) widerstanden wird.

9. Generator gemäß einem der Ansprüche 1 bis 8, wobei die Tiefeneinstellmittel (3a, 3b, 3c, 3d) durch eine Winde (4a, 4b, 4c, 4d) mit dem Reaktionselement gekoppelt sind.

10. Generator gemäß einem der Ansprüche 1 bis 9, wobei mindestens eines von:
a. der Länge des Reaktionselements;
b. der Breite des Reaktionselements;
c. dem Durchmesser des Reaktionselements;
aus dem Bereich von 20 bis 60 Metern ausgewählt ist.

11. Generator gemäß einem der Ansprüche 1 bis 10, wobei mindestens eines von:
a. dem Durchmesser des Schwimmers;
b. der Länge des Schwimmers;
c. der Breite des Schwimmers;
aus dem Bereich von 10 bis 20 Metern ausgewählt ist.

12. Generator gemäß einem der Ansprüche 1 bis 11, wobei die Entfernung zwischen dem Schwimmer (2) und dem Reaktionselement (1) aus dem Bereich von 0 bis 50 Metern ausgewählt ist.

## Revendications

1. Un générateur pour la conversion du mouvement des vagues dans une masse d'eau en énergie utile, le générateur comprenant : au moins un flotteur de captage d'énergie (2) qui est déplaçable en réponse audit mouvement des vagues ; un organe de réaction (1) destiné à être positionné au-dessous du flotteur de captage d'énergie (2) ; des moyens de raccordement (5a, 5b, 5c, 5d) pour le raccordement dudit au moins un flotteur de captage d'énergie (2) audit organe de réaction (1) ; des moyens de conversion en énergie (6a, 6b, 6c, 6d) pour la conversion du déplacement relatif entre ledit organe de réaction (1) et ledit au moins un flotteur de captage d'énergie respectif (2) en cette énergie utile ; le générateur incluant des moyens de réglage de profondeur adaptables (3a, 3b, 3c, 3d) pour le réglage, sur une gamme prédéfinie, de la profondeur de l'organe de réaction (1) dans la masse d'eau et de la hauteur de l'organe de réaction (1) depuis un lit de la masse d'eau, où à la fois le flotteur (2) et l'organe de réaction (1) ont une flottabilité positive ; et **caractérisé en ce que** le générateur comprend au moins un mode de fonctionnement submergé dans lequel l'organe de réaction (1) et le flotteur de captage d'énergie (2) sont submergés à l'aide des moyens de réglage de profondeur (3a, 3b, 3c, 3d).

2. Un générateur tel que revendiqué dans la revendication 1, où les moyens de raccordement (5a, 5b, 5c, 5d) définissent une distance entre ledit flotteur de captage d'énergie (2) et ledit organe de réaction (1).

3. Un générateur tel que revendiqué dans la revendication 2, où les moyens de raccordement (5a, 5b, 5c, 5d) sont de longueur ajustable pour l'ajustement indépendant de la distance entre le flotteur de captage d'énergie (2) et l'organe de réaction (1).

4. Un générateur tel que revendiqué dans la revendication 1, la revendication 2, ou la revendication 3, où la flottabilité positive du flotteur (2) et de l'organe de réaction (1) cause une tension adéquate dans les moyens de réglage de profondeur (3a, 3b, 3c, 3d) pour apporter de la stabilité à l'organe de réaction (1) lorsqu'il est submergé.

5. Un générateur tel que revendiqué dans les revendications 1 à 4, dans lequel les moyens de raccordement (5a, 5b, 5c, 5d) comprennent au moins une ligne flexible de longueur ajustable, l'ajustement de la longueur étant réalisé par enroulement de la ou de chaque ligne flexible autour d'un tambour respectif.

6. Un générateur tel que revendiqué dans les revendications 1 à 5, dans lequel les moyens de raccordement (5a, 5b, 5c, 5d) sont montés de façon ajustable sur l'organe de réaction (1) de telle sorte que la géométrie des moyens de raccordement (5a, 5b, 5c, 5d) peut être modifiée.

7. Un générateur tel que revendiqué dans l'une quelconque des revendications 1 à 6, où les moyens de réglage de profondeur (3a, 3b, 3c, 3d) comprennent au moins une ligne d'ancrage flexible de longueur ajustable afin de positionner de façon ajustable l'organe de réaction (1) au-dessus du lit de la masse d'eau.

8. Un générateur tel que revendiqué dans la revendication 7, le générateur ayant une flottabilité positive nette à laquelle s'oppose la tension de l'au moins une ligne d'ancrage flexible (3a, 3b, 3c, 3d).

9. Un générateur tel que revendiqué dans l'une quelconque des revendications 1 à 8, où les moyens de réglage de profondeur (3a, 3b, 3c, 3d) sont couplés à l'organe de réaction par un treuil (4a, 4b, 4c, 4d).

10. Un générateur tel que revendiqué dans l'une quelconque des revendications 1 à 9, où au moins un paramètre parmi :
a. la longueur de l'organe de réaction ;
b. la largeur de l'organe de réaction ;
c. le diamètre de l'organe de réaction ;
est sélectionné dans la gamme allant de 20 à 60 mètres.

11. Un générateur tel que revendiqué dans l'une quelconque des revendications 1 à 10, où au moins un paramètre parmi :
a. le diamètre du flotteur ;
b. la longueur du flotteur ;
c. la largeur du flotteur ;
est sélectionné dans la gamme allant de 10 à 20 mètres.

12. Un générateur tel que revendiqué dans l'une quelconque des revendications 1 à 11, où la séparation entre le flotteur (2) et l'organe de réaction (1) est sélectionnée dans la gamme allant de 0 à 50 mètres.
